(19) Europäisches Patentamt
European Patent Office
Office européen des brevets

(11) **EP 2 363 696 A1**

(12) **EUROPÄISCHE PATENTANMELDUNG**

(43) Veröffentlichungstag:
**07.09.2011 Patentblatt 2011/36**

(51) Int Cl.:
**G01J 3/51** (2006.01)

(21) Anmeldenummer: **11000600.4**

(22) Anmeldetag: **26.01.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.01.2010 DE 102010006024**

(71) Anmelder: **Herzberg, Heiko**
**16556 Hohen Neuendorf OT (DE)**

(72) Erfinder: **Herzberg, Heiko**
**16556 Hohen Neuendorf OT (DE)**

(74) Vertreter: **Seuss, Thomas et al**
**Jungblut & Seuss**
**Patentanwälte**
**Max-Dohrn-Strasse 10**
**10589 Berlin (DE)**

(54) **Sensormodul zur Messung objektschädigender Strahlung**

(57)     Die Erfindung betrifft ein Sensormodul zur Messung objektschädigender Strahlung zum Einsatz in Museen und Galerien.

Durch Sensorelemente die in unterschiedlichen Wellenlängenbereichen empfindlich sind wird die Strahlungsintensität in verschiedenen Spektralbereichen bestimmt und durch Multiplikation der einzelnen Sensorsignal mit einem Wellenlängen-abhängigem Gewichtungsfaktor und anschließende Summation ein Schadfaktor berechnet

**Fig. 5:**

**Beschreibung**

**Stand der Technik**

Die historische Farbveränderung von Ausstellungsgegenständen kann an sehr vielen historischen Gemälden beobachtet werden. Als Hauptursache dieser Farbveränderungen ist optische Strahlung ("Licht") zu nennen. Werden Kunstwerke längere Zeit optischer Strahlung ausgesetzt werden die zu beobachtenden Schäden mit der Zeit größer. Als Maß dieser zugefügten schädigenden optischen Strahlung gilt die wirksame Bestrahlung $H_{dm}$. Bei einem Großteil von photochemischen und auch photobiologischen Wirkungen besteht ein nichtlinearer Zusammenhang zwischen der Ursache (wirksame Bestrahlung $H_{dm}$) und der Wirkung (Farbänderung). Im Allgemeinen ist damit zu rechnen, dass mit zunehmender Bestrahlung die Farbänderung zunächst relativ rasch verläuft, wobei differenziell ein linearer Zusammenhang zwischen Ursache und Wirkung angesetzt werden kann. Erst mit der genauen Bestimmung des Zusammenhanges zwischen Schädigung und wirksamer Bestrahlung ist man in der Lage eine Aussage über die zu erwartende Farbveränderung zu generieren.

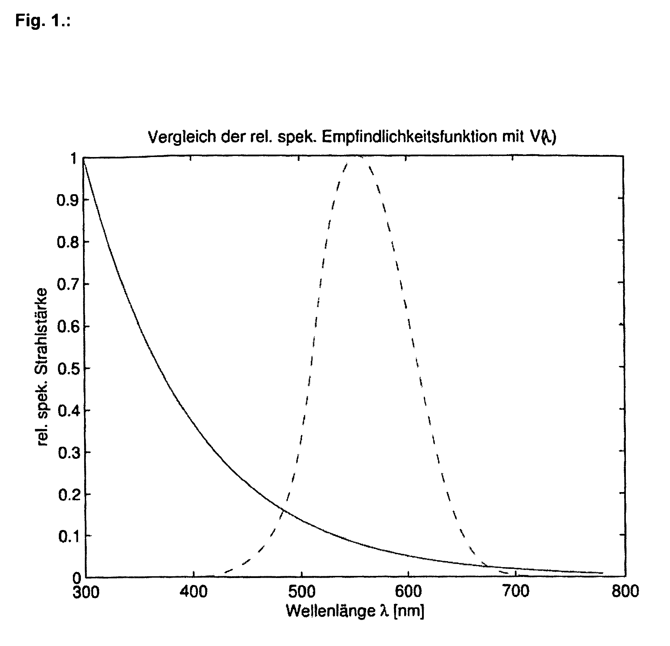

Wie weiter unten ausführlich beschrieben werden wird, besteht ein Zusammenhang zwischen der Wellenlänge der Strahlung und der Höhe der Schädigung. Theoretisch wäre man in der Lage mit einem dementsprechend angepassten Sensor die schädigende Strahlung an Kunstwerken zu messen. Praktisch werden in Museen und Galerien nur Photometer (Luxmeter) verwendet. Deren spektrale Anpassung ist der spektralen Empfindlichkeit des menschlichen Auges $V(\lambda)$ nachempfunden. Die unterschiedlichen spektralen Bewertungen der objektschädigenden Strahlung und der zur Messung eingesetzten Photometerköpfe ist in Figur 1 dargestellt. Es ist deutlich zu erkennen, dass nur ein kleiner, unempfindlicher Bereich übereinstimmt. Die empfindlichsten Bereiche differieren voneinander.

Es sind bereits seit 1888 die Auswirkungen optischer Strahlung auf Kunstwerke bekannt (Russel, W., Abney, W. (1888): Action of Light on Water Colours: Report to the Science and Art Department of the Committee of Council on Education (London)). Seit einiger Zeit wurde die relative spektrale Empfindlichkeit $s(\lambda)_{dm,rel}$ gemäß der Gleichung 1

$$s(\lambda)_{dm,rel} = e^{-b(\lambda-300[nm])}$$ (Gleichung 1)

definiert. Hierbei ist die Schädigung exponentiell von der Wellenlänge abhängig. Strahlungsanteile unter 300 nm sind in Innenräumen nicht zu erwarten. Der Vorfaktor b ist eine materialspezifische Kennzahl, welche die Größe des spektralen Gradienten beschreibt.

Der Zusammenhang zwischen Ursache und Wirkung ist nach vielen Untersuchungen nicht linear. Stellt man die Farbveränderung als Wirkung des Einflusses optischer Strahlung der wirksamen Bestrahlung $H_{dm}$ gegenüber ist deutlich ein nichtlinearer Zusammenhang erkennbar.

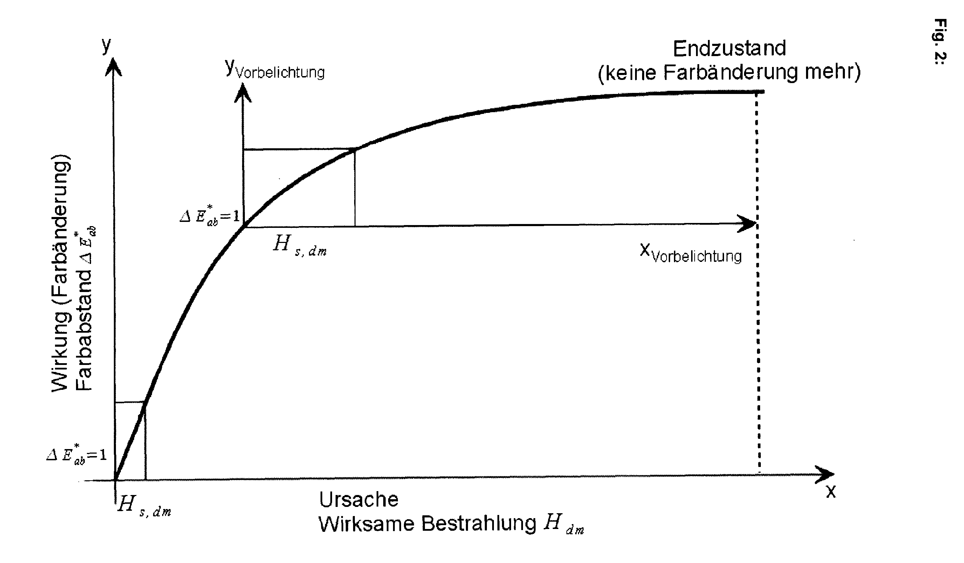

Im Allgemeinen ist zu erkennen, dass mit zunehmender Bestrahlung die Farbveränderung zunächst relativ rasch verläuft, wobei differenziell ein linearer Zusammenhang zwischen Ursache und Wirkung angesetzt werden kann. Bei größeren Bestrahlungen verlangsamt sich die Zunahme der Farbveränderung und kann bei einer Reihe von Proben in einen Endzustand auslaufen. In diesem Bereich ist die Farbe soweit verändert, dass bei weiterer Bestrahlung nahezu keine Farbveränderung mehr vorkommt. Diese Erscheinung ist im Prinzip in Figur 2 dargestellt (Quelle: Aydinli, S., Hilbert, G., Krochmann, J., (1983): Über die Gefährdung von Ausstellungsgegenständen durch optische Strahlung, Licht Forschung (5), 35-48). In diesem Bild ist zusätzlich der Einfluss der Vorbelichtung dargestellt. Hier ist zu sehen, dass für die gleiche Farbveränderung (hier gegeben durch $\Delta E^{*}_{ab}=1$) die wirksame Schwellenbestrahlung $H_{s,dm}$ für die vorbehandelte Probe viel größer ist, d. h. die vorbelichtete Probe gegen Strahlung unempfindlicher ist als die noch nicht vorbehandelte Probe. Bei anderen Proben können rückläufige Prozesse beobachtet werden, bei denen jedoch nie der ursprüngliche Zustand (die ursprüngliche Farbe) wieder erreicht wird.

Die Irreversibilität dieser photochemischen Reaktionen bedingt eine große Sorgfalt bei der Beleuchtung von Kunstwerken. Die wirksame Bestrahlung $H_{dm}$ wird in Abhängigkeit der Bestrahlung $H_e$ im Zusammenhang mit der relativen wirksamen Empfindlichkeit gemäß der Gleichung 2 angesetzt:

$$H_{dm} = \int_{t} \int_{\lambda} E_{e,\lambda} \cdot s(\lambda)_{dm,rel} \; d\lambda \; dt$$

Gleichung 2

Die wirksame Schwellenbestrahlung $H_{s,dm}$ wird definiert als die wirksame Bestrahlung $H_{dm}$ die eine gerade zu erkennende Veränderung hervorruft. Im CIELAB-Farbraum entspricht dies einem Farbabstand von $\Delta E^*_{ab}=1$.

$$H_{s,dm} = H_{dm}\big|_{E^*_{ab}=1}$$

Gleichung 3

Für Messungen der Strahlung im Bereich der Museen und Galerien existieren zur Zeit diverse Messgeräte. Diese sind jedoch nicht in der Lage direkt die schädigende Strahlung zu erfassen. Spektralradiometer können mit Hilfe einer Software die schädigende Strahlung berechnen, jedoch ist ein Spektralradiometer kostenintensiver (ca. Faktor 20) und schwerer zu handhaben als ein Handmessgerät.

**Allgemeine Beschreibung der Erfindung**

Im Rahmen dieser Patentanmeldung wird vorgeschlagen, ein Sensormodul gemäß der Ansprüche zu verwenden, um die in Museen und Galerien herrschende Strahlung zu detektieren. Dieses Sensormodul kann in Form eines Handmessgerätes vorliegen, kann aber auch fest, z. B. direkt an einem Gemälde, installiert werden. Hierdurch kann das aktuelle strahlungsabhängige Schädigungspotential, und das Gesamtpotential bestimmt werden. Darüber hinaus können in weiteren Ausgestaltungen des erfindungsgemäßen Moduls Warnhinweise bei Erreichung bestimmter Schwellenwerte erzeugt werden. Darüber hinaus kann das erfindungsgemäß Modul auch zu einer Protokollierung der Strahlung dienen.

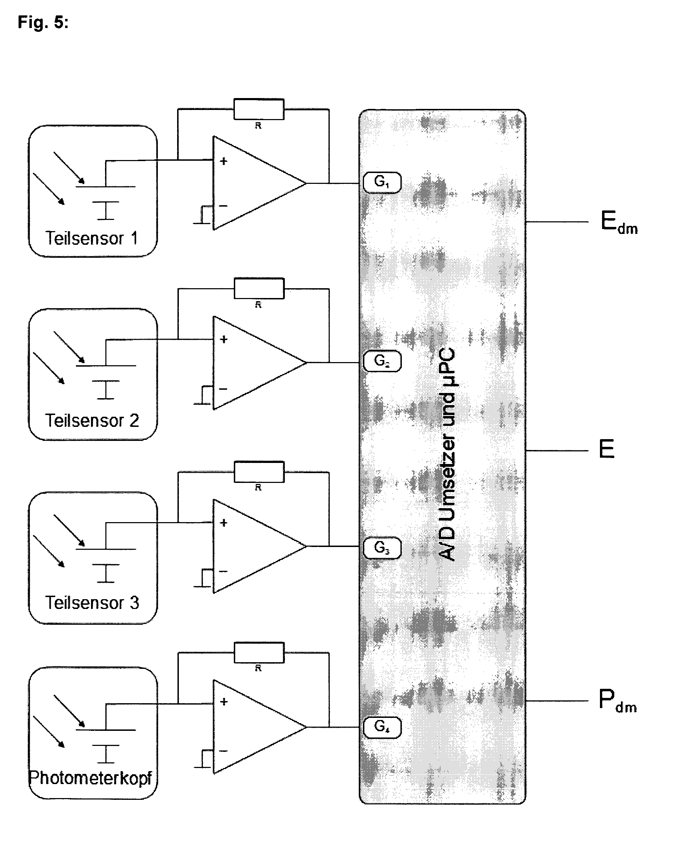

Eine Ausführungsform der Erfindung ist daher ein Sensormodul zur Messung objektschädigender Strahlung im Wellenlängenbereich von 200-1.000 nm, gekennzeichnet durch mindestens zwei lichtempfindlichen Sensorelemente mit jeweils einem oder mehreren Filtern, wobei die verschiedenen Sensorelemente mit den jeweiligen Filtern für unterschiedliche Wellenlängenbereiche empfindlich sind, sowie einem Auswertemodul, welches die aufgrund der gemessenen Strahlung der einzelnen Sensorelemente erhaltenen jeweiligen Ausgangssignale mit einem Gewichtungsfaktor multipliziert und zu einem aktuellen Schädigungspotential summiert. Ein Blockschaltbild ist der Figur 5 zu entnehmen. Das Auswertemodul basiert bevorzugt auf einem Mikroprozessor.

Weitere Ausführungsformen der Erfindung sind durch die abhängigen Ansprüche sowie die Nebenansprüche gekennzeichnet.

Das erfindungsgemäße Sensormodul besteht daher aus mindestens zwei lichtempfindlichen Sensorelementen, welche jeweils mit einem oder mehreren Filtern versehen sind. Die jeweiligen Filter mit den jeweiligen Sensorelementen sind generell im Wellenlängenbereich von 200 -1.000 nm empfindlich, wobei sich die Bereiche derartig ergänzen, dass insgesamt eine möglichst große Bandbreite des eingangs genannten Wellenlängenbereiches von 200 - 1.000 nm, mindestens aber der Wellenlängenbereiches von 300 - 600 nm, abgedeckt ist. Dies kann beispielsweise dadurch erreicht werden, dass ein erstes Sensorelement im Wellenlängenbereich von 240 - 400 nm empfindlich ist, während das zweite Sensorelement im Bereich von 380 - 900 nm empfindlich ist. Aufgrund der bekannten spektralen Empfindlichkeit der Sensorelemente können die verschiedenen Empfindlichkeitsbereiche überlappen. Wellenlängen von < 300 nm treten in Innenräume praktisch nicht auf und sind daher vergleichsweise unwichtig. Wellenlängen > 600 nm tragen nur wenig zur Schädigung bei und sind daher nur von untergeordnetem Interesse. Die erfindungsgemäßen Sensormodule müssen daher mindestens im Bereich von 300 - 600 nm besonders empfindlich sein. Aus praktischen Gründen sind sie in der Regel im Bereich von ca. 250 nm bis ca. 800 nm empfindlich.

Das erfindungsgemäße Sensormodul weist darüber hinaus ein Auswertemodul auf. Dieses misst das von den einzelnen Sensorelementen erzeugte elektrische Signal. Diese werden in den Gleichungen 4 und 7 ausgewertet und ausgegeben. Hierzu werden die verschiedenen Sensorelemente kalibriert und bzgl. des jeweiligen Schädigungspotentials gewichtet.

Die Ausgabe des Signals kann in Form eines aktuellen Messwertes der Bestrahlung ($H_{s,dm}$) für die jeweils zum Messzeitpunkt auftretende Strahlung erfolgen. Diese Ausgabe kann auch über die Zeit aufgezeichnet werden, so dass beispielsweise zeitliche Änderungen der Bestrahlung (beispielsweise durch unterschiedlichen Sonnenstand) aufgezeichnet werden können. Gleichzeitig oder alternativ kann die Bestrahlung über die Zeit integriert werden und somit die wirksame Bestrahlung ($H_{s,dm}$) ermittelt werfen. Die Aufzeichnung der Meßwerte kann elektronisch (als gespeicherte Datei) oder auf andere, dem Fachmann bekannte Weise, beispielsweise in Form eines Papierausdrucks erfolgen.

Weiterhin sind Ausführungsformen möglich, wobei nach Erreichen eines Schwellenwertes der Bestrahlung, oder eines Schwellenwertes der wirksamen Bestrahlung (als Maß der Gesamtschädigung) jeweils ein Warnsignal ausgelöst wird. Dieses kann beispielsweise dazu dienen, Verdunklungsmaßnahmen herbeizuführen (beispielsweise durch Aktivierung von Jalousien oder anderen Verdunkelungsmaßnahmen).

In einer weiteren Ausführungsform der Erfindung wird das erfindungsgemäße Sensormodul am oder in der Nähe eines Objektes fest installiert (beispielsweise in den Rahmen eines Kunstwerkes integriert). Auf diese Weise kann in einfacher Weise die Gesamtstrahlenexposition, in Form der wirksamen Bestrahlung ($H_{s,dm}$), eines Kunstwerks im Laufe einer Ausstellung gemessen und dokumentiert werden.

Das Schädigungspotential $P_{dm}$ kann gemäß der Gleichung 4 ermittelt werden.

$$P_{dm} = \frac{E_{dm}}{E} \left[ \frac{\mathrm{W}}{\mathrm{m}^2 \cdot \mathrm{lx}} = \frac{\mathrm{W}}{\mathrm{lm}} \right]$$

Gleichung 4

Das Schädigungspotential gibt Aufschluss über die durch die Strahlung zu erwartenden Schäden und ist kennzeichnende Größe zur Bestimmung der Expositionsdauer $t_s$ gemäß der Gleichung 5.

$$t_s = \frac{H_{s,dm}}{P_{dm} \cdot E}$$

Gleichung 5

Die schädigende Bestrahlungsstärke und das Schädigungspotential konnten bisher nur sehr aufwändig mit einem Spektrometer (Spektralradiometer) gemessen werden.

Wie bereits weiter oben erläutert misst das erfindungsgemäß vorgeschlagene Sensormodul nicht die gemäß der menschlichen Sehfunktion empfundene Helligkeit, sondern die spektrale Schädigungsfunktion.

Ein erfindungsgemässes Sensormodul hat daher zwei oder mehr strahlungsempfindliche Sensorelemente, ggf. eine Sensorsignalaufbereitungsschaltung, eine Signalverknüpfungseinrichtung, und ggf. verschiedene Einrichtungen zur Parametereinstellung und Kalibrierung. Die Sensorsignalaufbereitungsschaltung, und die Signalverknüpfungseinrichtung sind bevorzugt auf einem einzigen Chip (Application Specific Integrated Circuit) ausgebildet. Der Chip zur Sensorsignalverarbeitung und das Sensorelement sind in einem gemeinsamen Gehäuse untergebracht.

Darüber hinaus können auch die Sensorelemente zusammen mit der Sensorsignalaufbereitungsschaltung, der Referenzeinrichtung und der Signalverknüpfungseinrichtung auf einem einzigen Chip untergebracht sein.

Vorzugsweise ist das Gehäuse vergleichsweise klein. In einer bestimmten Schnittebene kann es so ausgebildet sein, dass keine Abmessung des Querschnitts grösser als 20 mm ist. Es kann sich dabei um ein zylindrisches Gehäuse handeln, wobei der Durchmesser des Zylinders nicht grösser als 10 mm ist.

Es gibt bislang keine Sensoren, die die oben genannte spektrale Empfindlichkeit aufweisen. Es wird daher erfindungsgemäß vorgeschlagen ein Sensormodul bestehend aus mehreren Sensorelementen mit jeweils unterschiedlichen Spektralbereichen zu verwenden. Bevorzugt werden drei Sensorelemente mit unterschiedlichen Empfindlichkeiten verwendet.

Die Auswertung der Einzelsignale aus den einzelnen Sensorelementen findet separat statt und wird rechnerisch zu einer Bestrahlungsstärke $E_{dm,\ rel}$ verarbeitet. Eine Kombination aus Beleuchtungsstärke-Messkopf und Sensor wird mit einer digitalen Schnittstelle verbunden, so dass die Auswertung und Berechnung des Schädigungspotentials direkt möglich ist.

Die wichtigste Eigenschaft dieses optischen Sensormoduls ist die spektrale Empfindlichkeit s ($\lambda$). Sie beschreibt die Fähigkeit des Sensors, die Energie der auf ihn fallenden Strahlung einer bestimmten Wellenlänge $\phi_e(\lambda)$ in einen elektrischen Strom (Photostrom - $I_{ph}$) umzuwandeln. Die Maßeinheit von s($\lambda$) ist A/W.

$$s(\lambda) = \frac{I_{ph}(\lambda)}{\Phi_e(\lambda)}$$

Gleichung 6

Aufgrund der hohen Dynamik der spektralen Verteilung und des zeitlichen Verlaufs der Strahlung ist eine einfache Kombination aus einem Sensorelement mit einem Filter zur Messung des Schädigungspotentials ungeeignet. Das Signal-RauschVerhältnis würde überdimensional ansteigen und die Messung verfälschen. Daher wird der gesamte Spektralbereich in mehrere Teile, bevorzugt drei Teile, unterteilt. Werden die spektralen Empfindlichkeiten mehrerer

Sensoren $S_m(\lambda)$ und deren Filtertransmissionsgerade $T_n(\lambda)$ wellenlängenabhängig summiert, so ergibt sich die Spektralempfindlichkeit des gesamten Sensormoduls ($s(\lambda)$) aus der Gleichung 7.

$$s(\lambda) = \sum_{n=1}^{x} G_n \cdot s_n(\lambda) \cdot \tau_n(\lambda)$$

Gleichung 7

Das Signal jeder einzelnen Kombination wird mit einem Gewichtungsfaktor $G_n$ multipliziert um die Kalibrierung der Empfindlichkeit und jeweiligen angrenzenden Bereich durchzuführen.

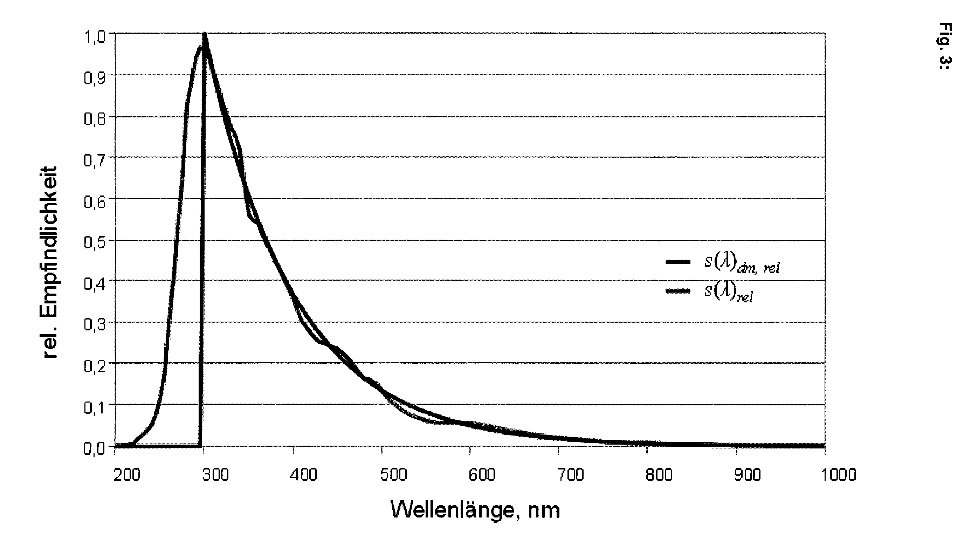

Ein Vergleich von $s(\lambda)_{rel}$ und $S(\lambda)_{dm,rel}$ wird in Figur 3 dargestellt. Beispielhaft werden die verwendeten Elemente, sowie die Anpassungsparameter in der Tabelle 1 zusammengefasst. Es sind selbstverständlich auch andere Sensorfilterkombinationen realisierbar. Der Fachmann auf dem Gebiet kann derartige Kombinationen basierend auf seinem Fachwissen zur Verfügung stellen, ohne erfinderisch tätig werden zu müssen.

**Tab. 1:**

| Sensor | aktiver Bereich [nm] | Filter | | Gewichtungsfaktor G | aktiver Bereich [nm] | |
|---|---|---|---|---|---|---|
| | $s(\lambda) > 1\%$ | Name | Dicke [mm] | | $s(\lambda)_{komb} > 1\%$ | $s(\lambda)_{komb} > 5\%$ |
| SIC01S | 200 - 405 | N-WG 280 | 1 | 0,9 | 245 - 405 | 255 - 395 |
| EPD-440 | 200 - 585 | UG5 | 0,28 | 0,45 | 255 - 555 | 230 - 530 |
| S5973-02 | 295 - 1040 | GG 495 | 1 | 0,08 | 355 - 885 | 480 - 790 |
| | | BG 42 | 0,3 | | | |

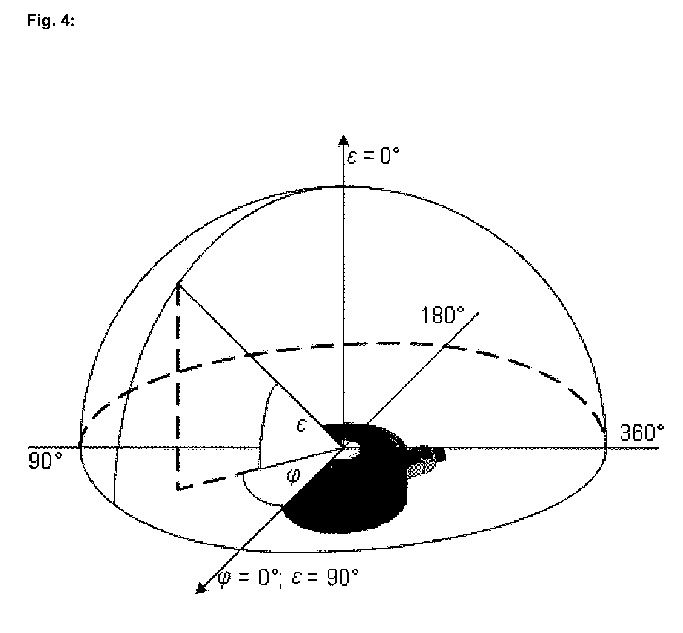

Darüber hinaus kann in weiteren Ausführungsformen der Erfindung die Winkelabhängigkeit der Strahlung ermittelt und ausgewertet werden. Grundlage der Richtungsmessung ist die Norm DIN EN 13032 Anhang B.4 "Richtungsabhängige Empfindlichkeit". Es wird der gesamte Halbraum über einen Empfänger erfasst (Figur 4). Das Schädigungspotential ist abhängig vom Cosinus des Winkels ε. Maximales Schädigungspotential wird daher bei senkrechtem Lichteinfall erzielt. Gemäß dieser Ausführungsform der Erfindung wird daher die gemessene Strahlung mit dem Cosinus des Winkels ε multipliziert. Die Auswertung des Winkelanteils erfolgt in dem Fachmann bekannter Weise durch entsprechende Streuscheiben. Diese Streuscheiben sind dem Fachmann bekannt. Er kann auch die die entsprechenden Streuscheiben auswählen, ohne hierzu erfinderisch tätig werden zu müssen.

**Patentansprüche**

1. Sensormodul zur Messung objektschädigender Strahlung im Wellenlängenbereich von 200-1.000 nm, **gekennzeichnet durch**
   mindestens zwei lichtempfindlichen Sensorelemente mit jeweils einem oder mehreren Filtern, wobei die verschiedenen Sensorelemente mit den jeweiligen Filtern für unterschiedliche Wellenlängenbereiche empfindlich sind, sowie einem Auswertemodul, welches die aufgrund der gemessenen Strahlung der einzelnen Sensorelemente erhaltenen jeweiligen Ausgangssignale mit einem Gewichtungsfaktor multipliziert und zu einem aktuellen Schädigungspotential summiert.

2. Sensormodul zur Messung objektschädigender Strahlung im Wellenlängenbereich von 200-1.000 nm gemäß Anspruch 1, **dadurch gekennzeichnet, dass** das Auswertemodul den zeitlichen Verlauf des Schädigungspotentials erfasst.

3. Sensormodul zur Messung objektschädigender Strahlung im Wellenlängenbereich von 200-1.000 nm gemäß Anspruch 2, **dadurch gekennzeichnet, dass** das Auswertemodul bei Überschreiten eines Schwellenwertes des Schädigungspotentials ein Signal erzeugt.

4. Sensormodul zur Messung objektschädigender Strahlung im Wellenlängenbereich von 200-1.000 nm gemäß Anspruch 1, **dadurch gekennzeichnet, dass** das Sensormodul genau 3 Sensorelemente mit jeweils einem Filter enthält, wobei

das erste Sensorelement mit dem ersten Filter im Wellenlängenbereich von 245-405 nm, empfindlich ist,
das zweite Sensorelement mit dem zweiten Filter im Wellenlängenbereich von 255-555 nm, empfindlich ist und
das dritte Sensorelement mit dem dritten Filter im Wellenlängenbereich von 355-855 nm, empfindlich ist.

5.   Sensormodul zur Messung objektschädigender Strahlung im Wellenlängenbereich von 200-1.000 nm gemäß Anspruch 1, **dadurch gekennzeichnet, dass** das Sensormodul genau 3 Sensorelemente mit jeweils einem Filter enthält, wobei
das erste Sensorelement mit dem ersten Filter im Wellenlängenbereich von 255-395 nm, empfindlich ist,
das zweite Sensorelement mit dem zweiten Filter im Wellenlängenbereich von 230-530 nm, empfindlich ist und
das dritte Sensorelement mit dem dritten Filter im Wellenlängenbereich von 480-790 nm, empfindlich ist.

6.   Verwendung eines Sensormoduls gemäß mindestens einem der Ansprüche 1-4 zur Bestimmung der strahlungsabhängigen Objektschädigung an Ausstellungsobjekten, wie beispielsweise Gemälden, Drucken oder Fotografien.

7.   Verwendung eines Sensormoduls gemäß mindestens einem der Ansprüche 1-4 zur Bestimmung der strahlungsabhängigen Objektschädigung in Museen oder Ausstellungsräumen.

8.   Verwendung gemäß Anspruch 6 und 7, wobei an einem Objekt ein Sensormodul permanent befestigt ist und die Gesamtstrahlungsexposition während der Ausstellungszeit ermittelt.

9.   Verwendung gemäß Anspruch 8, wobei das Sensormodul bei Überschreiten einer Gesamtexposition ein Signal erzeugt.

Fig. 1.:

Vergleich der rel. spek. Empfindlichkeitsfunktion mit V(λ)

**Fig. 2:**

**Fig. 3:**

**Fig. 4:**

**Fig. 5:**

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 2 299 249 A1 (SEMPERLUX AG LICHTTECHNISCHE WERKE [DE]) 23. März 2011 (2011-03-23) * Absätze [0021], [0022] * ----- | 1-9 | INV. G01J3/51 |
| Y | "Monitoring the Museum Environment", INTERNET CITATION, 2003, Seiten 1-7, XP002605992, Gefunden im Internet: URL:http://www.mavic.asn.au/assets/Info_Sheet_6_Environmental_Monitoring.pdf [gefunden am 2010-10-20] * Seiten 2-3 * ----- | 1-9 | |
| Y | Thomson, Garry: In: "The museum environment", 2002, Butterworth-Heinemann, Oxford, XP002650395, Seiten 184-184, * das ganze Dokument * ----- | 1-9 | |

| | RECHERCHIERTE SACHGEBIETE (IPC) |
|---|---|
| | G01J |

Der vorliegende Recherchenbericht wurde für alle Patentansprüche erstellt

| Recherchenort | Abschlußdatum der Recherche | Prüfer |
|---|---|---|
| München | 14. Juli 2011 | Hambach, Dirk |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 00 0600

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-07-2011

| Im Recherchenbericht angeführtes Patentdokument | Datum der Veröffentlichung | Mitglied(er) der Patentfamilie | Datum der Veröffentlichung |
|---|---|---|---|
| EP 2299249        A1 | 23-03-2011 | DE 102009044063 B3 | 24-03-2011 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **AYDINLI, S. ; HILBERT, G. ; KROCHMANN, J.** Über die Gefährdung von Ausstellungsgegenständen durch optische Strahlung. *Licht Forschung,* 1983, 35-48